# EUROPEAN PATENT APPLICATION

(11) **EP 1 496 272 A1**
(43) Date of publication of application: **12.01.2005**
(21) Application number: 04102896.0
(22) Date of filing: 23.06.2004
(51) Int. Cl.: F16B 31/02, F16B 23/00, G01F 23/02, F16B 33/00

(54) **Limited-tightening plastic screw**

(30) Priority: 09.07.2003 IT MI20030320
(71) Applicant: ELESA S.p.A., 20122 Milano (IT)
(72) Inventor: BERTANI, Alberto, 20131, MILANO (IT)
(74) Representative: Faggioni, Giovanmaria, Dr.

(57) **Abstract**

A limited-tightening screw, in particular for the fixing of the column-shaped elements of devices indicating the level of liquids and for the feeding of liquids to said elements, of the type comprising an axial dead hole along the shank and a transversal through hole in the proximity of the head which crosses the axial hole. According to the invention, the screw is moulded in plastic material and the slot 5 for engagement with the screwdriver C, on the screw head, has a bottom 6 with rounded side wall areas. Furthermore, the radius of curvature of the rounded areas between the bottom and the side walls of the screwdriver slot of the head of this screw is chosen as being about one fourth of the thickness of the slot. Suitably, the moulding of this screw is performed by means of moulds which have lapped surfaces of the walls defining the axial dead hole 3 and the transversal through hole 4 thereof and which have rounded-edge cross-section elements in correspondence of the areas forming the screw thread.

## Description

The present invention relates to a limited-tightening screw, in particular for fixing the column-shaped elements of devices indicating the level of liquids and for the feeding of liquids to said elements.

In the prior art, devices indicating the level of liquids are known, which comprise a hollow column member made of clear technopolymer, having a graduated scale possibly associated to the surface thereof; the hollow column is currently fixed for example to a tank and filled with a liquid - whose level, inside the tank, is required to be known - by means of a pair of special screws which comprise on their shank an axial dead hole and in the proximity of their head a transversal through hole which crosses said axial hole. These special screws have always been cast in metal, with at least the holes and the head slot for the screwdriver being machined. They therefore require a complex and costly manufacturing process, which further entails some disadvantages both in terms of the mounting of the indicator devices, and in terms of the functionality thereof.

As far as the former aspect is concerned, during mounting - which often takes place directly onto the tanks containing the liquid whose level is required to be known - overtightening may easily occur, thereby causing an incorrect stressing of the seals and, in certain cases, even the breakage of the technopolymer column, with annoying leaks, as well as, in certain cases, irremediable damage to the device.

As far as the latter aspect is concerned, it is difficult to smoothen the surface of the screw holes - which form ducts for the liquid whose level is required to be known - as would be desirable, unless one resorts to complex and highly expensive machining processes.

Both these problems are surprisingly solved and other advantages are obtained by the screw for the fixing of column-shaped devices indicating the level of liquids and for the feeding of liquids to said devices, which are the subject matter of the present invention, as defined by claim 1).

Preferably, the radius of curvature of the rounded areas linking bottom and side walls of the screwdriver slot on the screw head is about one fourth of the thickness of the slot.

According to another feature of the invention, the moulding of the screw is performed by using a mould wherein the walls defining the axial dead hole and the transversal through hole have lapped surfaces.

According to a further feature of the invention, the moulding of the screw is performed by using a mould which has rounded-edge cross-section elements in correspondence of the areas forming the screw thread.

A currently preferred embodiment of the screw according to the invention is described in further detail in the following, as a purely illustrative example, with reference to the accompanying drawing, wherein:

fig. 1 illustrates a lateral view with a cross section of some parts of the screw head according to the invention;

fig. 2 is an axial section of the screw at 90° to the previous one, and

fig. 3 is a top view of the screw head;

figs. 4 and 5 are perspective views of the screw of figs. 1-3, whereas

figs. 6 and 7 show how a screwdriver blade is applied to a screw according to figs. 1-5;

fig. 8 shows a highly enlarged detail of the screw head according to the invention, and of the slot therein, occupied by the screwdriver blade; and

fig. 9 finally represents, in a reduced scale, a column-shaped level-indicating device made of technopolymer, of the type for which the screw according to the invention has been designed.

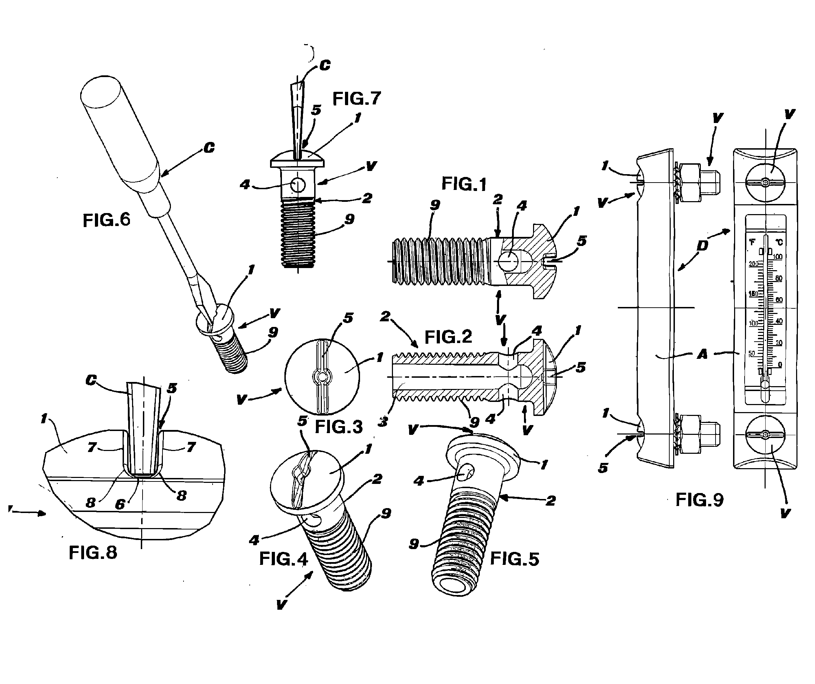

With reference to the drawings, fig. 9 shows a device D indicating the level of liquids, which comprises a hollow column-shaped element A, made of clear technopolymer, to which a graduated metal scale is associated. The mounting of the device D on the wall of a tank and the filling of said device with the liquid inside said tank, whose level is required to be known, are performed by a pair of special screws V. As known and already mentioned, these screws V have an axial dead hole along their shank and a transversal through hole which crosses the axial hole in the proximity of their head.

According to the invention, the special screws V - an embodiment of which is shown in figs. 1-8 - are manufactured by moulding plastic material in the general shape adopted up until today for the metal screws used for the same purpose, i.e. with head 1 and shank 2, the shank 2 having an axial dead hole 3 and in the proximity of the head 1 a transversal through hole 4 which crosses the axial hole 3. However, according to the main feature of the invention, the slot 5 for the engagement with the screwdriver C, on the head 1 of the screws V, has a special profile (see in particular fig. 8): as a matter of fact, the slot 5 has a bottom 6 which is linked to the side walls 7 through rounded areas 8.

Suitably, the radius of curvature of the rounded areas 8 linking the bottom 6 and the side walls 7 of the slot 5 for the screwdriver C is chosen, for the purposes set forth below, as being about one fourth of the thickness of the slot 5. As a purely illustrative example, with the thickness of the screwdriver slot 5 being about 2 mm, the bottom 6 is linked to the side walls 7 of the screw V through rounded areas 8, which have a radius of curvature of 0,5-0,6 mm.

In a known manner, on the shank 2 a threading 9 is provided which ends at a certain distance from the head 1.

Still according to an important feature of the invention, the moulding of the screws V is performed using a mould which has lapped surfaces in correspondence of the walls forming said axial dead hole 3 and said transversal through hole 4.

Moreover, the moulding of the screw is performed using a mould which has rounded-edge cross-section elements in correspondence of the areas forming the screw thread 9.

The screw according to the invention has some advantages which are rather obviously due to its manufacture using plastic material: thus it is of course resistant to corrosion and to atmospheric agents, which result can be attained by metal screws only resorting to expensive galvanic treatments, unless one wants to employ even more expensive stainless steel screws; it can be easily manufactured in various colours for customisation of the final product; it has considerably lower costs compared to the metal screws of the same type; and so on.

But, compared to known metal screws, the screw illustrated above has much more important properties, which derive not from the known properties typical of the plastic material it consists of, but instead from the particular structure adopted in its moulding according to the invention.

Mainly, the screw is a limited-tightening screw, that is, it behaves like a torque limiter upon tightening: thanks to the provision of the rounded areas 8 linking the bottom 6 with the side walls 7 of the slot 5 for the screwdriver C and to the intrinsic elasticity, compliance and deformability of the plastic material the screw V is made of, it has been surprisingly noticed that, during tightening and when the torque exceeds a predetermined value, the screwdriver C is automatically released from the slot 5 of the screw head it is engaged with, after having guaranteed the optimal tightening of the seals. Thanks to this feature, during mounting of the level-indicating device D of fig. 9, for example, secure tightening of the hollow column A of the device is achieved, avoiding any possible breakage thereof, without having to take particular care. Attention must be paid to the fact that, on the contrary, by using traditional special metal screws, it is customary to detail on the catalogue the maximum recommended torque value to be applied to the metal screw to correctly fix the level indicator to the tank: this causes complications and delays during mounting, without ruling out disadvantages completely. The guarantee provided by the special plastic screws shaped according to the invention, of not breaking the hollow column A of the device, allows on the other hand to avoid any possible undesirable leakage of liquid from the tank onto which the indicator is mounted and any possible resulting technical and/or environmental damage.

Other significant advantages of the invention stem from the special features which, according to the invention, characterise the moulds to manufacture the screw: the moulding method according to the invention provides in fact that use is made of a mould which has lapped surfaces in correspondence of the walls forming said axial dead hole and said transversal through hole. A particularly smooth surface of the holes where the liquid flows is thus obtained, which - for example again in the case of the level indicator - makes the inflow and outflow of the liquid easier and quicker, avoiding the detrimental stagnation of impurities.

The moulding method according to the invention further provides that use is made of a mould which has rounded-edge cross-section elements in correspondence of the areas forming the screw thread. A screw thread with rounded edges is thereby obtained, by means of which mounting of said screw is remarkably simplified, avoiding possible obstinacy due to dents on the crests, which are typical of metal screws.

It is understood that the invention extends its protection to screws which aim to be employed for the same use, in particular to screws such as those described which, instead of a simple slot such as 5 for the engagement of a blade screwdriver C, provide on their head, such as 1, a Phillips-shaped or Allen-shaped site with the bottom suitably shaped for use with corresponding tools.

## Claims

1. Limited-tightening screw, in particular for the fixing of column-shaped elements indicating the level of liquids and for the feeding of liquids to said elements, of the type comprising an axial dead hole along the shank and a transversal through hole in the proximity of the head which crosses the axial one, **characterised in that** it is moulded in plastic material and **in that** the slot (5) for engagement with the screwdriver (C) on the head (1) has a bottom (6) which is linked to the side walls (7) through rounded areas (8).

2. Screw as claimed in claims 1) wherein the radius of curvature of the rounded areas (8) linking the bottom (6) and the side walls (7) of the screwdriver slot (5) of the screw head (1) is about one fourth of the thickness of the slot (5).

3. Screw as claimed in claim 1) wherein the walls defining said axial dead hole (3) and said transversal through hole (4) are obtained onto corresponding lapped surfaces of the screw mould.

4. Screw as claimed in claim 1) wherein the screw thread (9) has a rounded-edge cross section.

5. Moulding method for a screw as claimed in claim 3) **characterised in that** use is made of a mould which has lapped surfaces in correspondence of the WALLS forming said axial dead hole (3) and said transversal through hole (4).

6. Moulding method as claimed in claim 5) to mould a screw as in claim 4), wherein use is made of a mould which has rounded-edge cross-section elements in correspondence of the areas forming the screw thread (9).
